# EUROPEAN PATENT APPLICATION

(11) **EP 4 804 460 A1**
(43) Date of publication of application: **09.09.2026**
(21) Application number: 23957205.0
(22) Date of filing: 01.11.2023
(51) Int. Cl.: H04L 9/40

(54) **RESOURCE ALLOCATION METHOD AND APPARATUS FOR GROUP, AND COMPUTER-READABLE STORAGE MEDIUM**

(71) Applicant: Shenzhen Xin-An Digital Technology Co., Ltd., Shenzhen City, Guangdong 518057 (CN)
(72) Inventor: ZHOU, Caiting, Shenzhen, Guangdong 518057 (CN); TIAN, Baoqiang, Shenzhen, Guangdong 518057 (CN); WANG, Liyan, Shenzhen, Guangdong 518057 (CN)
(74) Representative: Metida
(86) International application number: PCT/CN2023/129098
(87) International publication number: WO 2025/091332

(57) **Abstract**

A method for allocating resources within a group is provided, and the group includes a plurality of allocation objects. The method includes: a resource set is determined, and the resource set includes N resources each carrying a tag sequence number, and N is a positive integer; each allocation object determines an initial sequence number that does not conflict with those of other allocation objects, and generates a random sequence, the random sequence consists of N tag sequence numbers; an oblivious transfer method is used among the plurality of allocation objects, so that each allocation object iteratively obtains an intermediate sequence number from a plurality of random sequences based on the initial sequence number and a predetermined order of the plurality of allocation objects, until a target sequence number is obtained; and each allocation object obtains a target resource from the resource set according to the target sequence number.

## Description

### TECHNICAL FIELD

This application relates to data processing, and more particularly to a group resource allocation method, device, and computer-readable storage medium.

### BACKGROUND

This section is used to provide background or context for the embodiments of the present application. The description herein is not admitted to be prior art merely because it is included in this section.

In multi-party collaboration environments, existing methods rely on a certain centralized factor for resource grouping, allocation, scheduling, and generation of random factors to complete the allocation and matching of resources and roles.

Existing systems that use decentralized methods for random allocation typically rely directly on a blockchain as a medium for centralized data access or random factor generation. The efficiency of random allocation is limited by the performance of the blockchain, or there may be security risks, making it difficult to effectively ensure fairness and privacy.

Consequently, the above methods each have disadvantages in terms of security and reliability. There is a need for a decentralized, secure, reliable, verifiable, and confidential random allocation method that ensures fairness.

Therefore, how to provide a resource allocation method that is secure, fair, reliable, verifiable, and highly private is an urgent problem to be solved.

### SUMMARY

To address the problems in the prior art of being unable to simultaneously ensure safety, fairness, reliability, verifiability, and high privacy in resource allocation, this application provides a group resource allocation method, device, and computer-readable storage medium, thereby solving the above problems.

Technical solutions of the present disclosure are described as follows.

In a first aspect, this application provides a method for allocating resources within a group, wherein the group comprises a plurality of allocation objects, the method comprising:
determining a resource set, wherein the resource set comprises N resources each carrying a tag sequence number, where N is a positive integer;
determining, by each allocation object, an initial sequence number that does not conflict with those of other allocation objects, and generating a random sequence, wherein the random sequence consists of N tag sequence numbers;
using an oblivious transfer method among the plurality of allocation objects, so that each allocation object iteratively obtains an intermediate sequence number from a plurality of random sequences based on the initial sequence number and according to a predetermined order of the plurality of allocation objects, until a target sequence number is obtained; and
obtaining, by each allocation object, a target resource from the resource set according to the target sequence number.

In some embodiments, step of "each allocation object iteratively obtains an intermediate sequence number from a plurality of random sequences based on the initial sequence number and according to a predetermined order of the plurality of allocation objects" comprises:
each allocation object obtaining a corresponding (m+1)-th intermediate sequence number from an m-th random sequence based on an m-th intermediate sequence number;
wherein m sequentially takes values of positive integers from 1 to M, M is the number of allocation objects, the initial sequence number serves as a first intermediate sequence number, and an (M+1)-th intermediate sequence number serves as the target sequence number.

In some embodiments, step of "determining, by each allocation object, an initial sequence number that does not conflict with those of other allocation objects" comprises:
selecting, by an arbitrarily designated allocation object, the initial sequence number for each allocation object to ensure that initial sequence numbers do not conflict with each other.

In some embodiments, the plurality of allocation objects are registered on one or more transmission nodes of a transmission network, and a designated transmission node of the transmission network is deployed with an information receiver serving as a channel for each allocation object to publish information to the group.

In some embodiments, step of "determining, by each allocation object, an initial sequence number that does not conflict with those of other allocation objects" comprises:
signing, by each allocation object, a determined initial sequence number and publishing a signed initial sequence number in the group via an information receiver, so as to ensure that the initial sequence number determined by each allocation object does not conflict with each other.

In some embodiments, the method further comprises: making a hash commitment by each allocation object to a generated random sequence and publishing the hash commitment in the group via an information receiver.

In some embodiments, the method further comprises: adding a blinding factor when making the hash commitment by each allocation object to the generated random sequence.

In some embodiments, the method further comprises: in a hash verification phase, publishing the random sequence by each allocation object in the group via the information receiver, so that each allocation object mutually verifies a published random sequence based on a previously published hash commitment.

In some embodiments, the method further comprises: in a hash verification phase, publishing by each allocation object the random sequence and the blinding factor in the group via the information receiver, so that each allocation object mutually verifies a published random sequence and the blinding factor based on a previously published hash commitment.

In some embodiments, the method further comprises: publishing, by each allocation object, a key used in an oblivious transfer process in the group via the information receiver, so that each allocation object mutually verifies interactive information of the oblivious transfer process.

In some embodiments, the method further comprises: creating a trusted verification contract on a blockchain; and staking, by one or more allocation objects in the group, a trusted credential in the trusted verification contract.

In some embodiments, the trusted verification contract is configured to receive a hash commitment, a random sequence, a blinding factor, and corresponding signatures published by a designated allocation object in the group; verify whether the hash commitment, the random sequence, the blinding factor, and the corresponding signatures are consistent: if inconsistent, impose a penalty on a staked trusted credential of the designated allocation object in the trusted verification contract.

In some embodiments, the trusted verification contract is configured to receive public interactive information between designated allocation objects during an oblivious transfer process; receive a key used by designated allocation objects during the oblivious transfer process; verify the public interactive information during the oblivious transfer process based on the key used during the oblivious transfer process; and if inconsistent, impose a penalty on a staked trusted credential of the designated allocation objects in the trusted verification contract.

In some embodiments, the trusted verification contract is configured to impose a penalty on a staked trusted credential of an allocation object that exceeds a time limit in the trusted verification contract based on a time difference of interactive information between the plurality of allocation objects during the oblivious transfer process.

In some embodiments, the trusted verification contract is configured to receive an allocation result signed by each allocation object, and after signature verification, allocate resources to each allocation object according to the allocation result signed.

In a second aspect, this application provides a group resource allocation device, comprising: at least one processor, and a memory; wherein the memory is communicatively connected to the at least one processor; the memory is configured to store instructions executable by the at least one processor, the instructions, when executed by the at least one processor, cause the at least one processor to perform the method.

In a third aspect, this application provides a computer-readable storage medium, wherein the computer-readable storage medium is configured to store a program, and when the program is executed by a multi-core processor, the program causes the multi-core processor to perform the method.

One of the advantages of the above embodiments is the ability to fairly and efficiently allocate the resources required by all parties through ordered interaction of allocation entities, without the need for a trusted third party, while ensuring the transparency and verifiability of the entire process, random fairness, confidentiality of the results, and security of the process.

Other advantages of the present application will be explained in more detail in conjunction with the following description and accompanying drawings.

It should be understood that the above description is merely an overview of the technical solutions of the present application, so that the technical solutions of the present application can be understood more clearly, and thus can be implemented in accordance with the content of the description. In order to make the above and other objects, features, and advantages of the present application more apparent and understandable, specific implementations of the present application are illustrated below by way of examples.

### BRIEF DESCRIPTION OF THE DRAWINGS

By reading the detailed description of the embodiments below, those skilled in the art will understand the advantages and benefits described herein, as well as other advantages and benefits. The drawings are intended solely to illustrate embodiments and should not be construed as limiting the scope of the present disclosure. Furthermore, identical reference numerals are used throughout the drawings to denote identical components.
Fig. 1 is a flowchart illustrating a group resource allocation method according to an embodiment of the present disclosure;
Fig. 2 is a diagram illustrating intra-group interactions in the group resource allocation method according to an embodiment of the present disclosure; and
Fig. 3 is a schematic diagram of a group resource allocation system according to an embodiment of the present disclosure.

In the drawings, identical or corresponding reference numerals denote identical or corresponding parts.

### DETAILED DESCRIPTION OF EMBODIMENTS

The embodiments of the present disclosure will be described in detail below with reference to the accompanying drawings. Although the drawings illustrate exemplary embodiments of the present disclosure, it should be understood that the present disclosure may be implemented in various forms and is not limited to the embodiments described herein. These embodiments are provided to facilitate a more thorough understanding of the present disclosure and to fully convey the scope of the present disclosure to those skilled in the art.

In the description of the embodiments of the present disclosure, it should be understood that terms such as "comprising" or "having" are intended to indicate the presence of the disclosed features, numbers, steps, actions, components, parts, or combinations thereof in the description, and do not exclude the possibility of one or more other features, numbers, steps, actions, components, parts, or combinations thereof.

Unless otherwise specified, "/" denotes "or"; for example, A/B may denote A or B. The term "and/or" in this disclosure merely describes a relationship between associated objects, indicating that three possible relationships may exist; for example, A and/or B may denote: A alone, A and B together, or B alone.

The terms "first" and "second" are used merely for convenience of description to distinguish identical or similar technical features and should not be construed as indicating or implying the relative importance or quantity of these technical features. Accordingly, features defined by "first" and "second" may explicitly or implicitly include one or more of such features. In the description of the embodiments, unless otherwise specified, the term "multiple" means two or more.

It should also be noted that, where there is no conflict, the embodiments of the present disclosure and the features therein may be combined with one another. The present disclosure will now be described in detail with reference to the accompanying drawings and in conjunction with the embodiments.

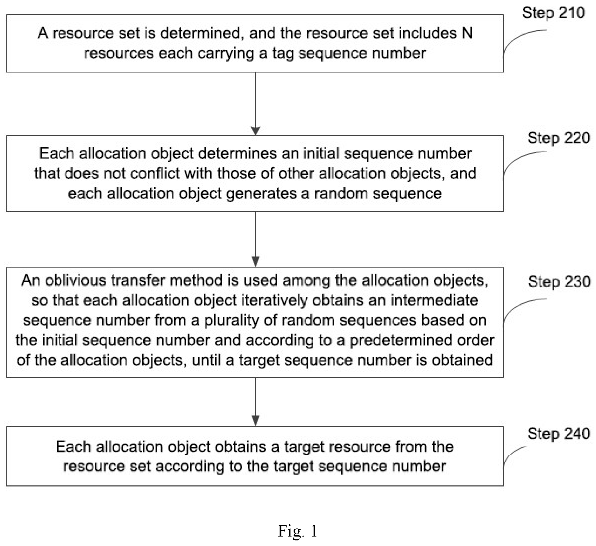

Fig. 1 is a schematic flowchart of a group resource allocation method according to an embodiment of the present disclosure. In this flowchart, from a device perspective, the method may be performed by one or more electronic devices; from a program perspective, the method may be performed by programs running on these electronic devices. The group includes a plurality of allocation objects (e.g., A, B, C, etc.).

As shown in Fig. 1, the method provided in this embodiment may include the following steps.

Step 210: A resource set is determined. The resource set includes N resources each carrying a tag sequence number, where N is a positive integer.

For example, the resource set R includes N resources {*r*₁*, r*₂, *... , r_{N}*}, and an allocation object set P includes M allocation objects {*p*₁*, p*₂, *... , p_{M}*}*.* k resources (k ≤ N) from the resource set R are to be fairly and randomly allocated to the allocation objects in the set P.

Further, N unique identifiers are used as independent tag sequence numbers for the N resources in the resource set R, such as the numbers 1, 2, 3, ..., N.

Step 220: Each allocation object determines an initial sequence number that does not conflict with those of the other allocation objects, and each allocation object generates a random sequence.

The random sequence consists of the N tag sequence numbers.

Specifically, each allocation object *p*₁*, p*₂, ... , *p_{M}* independently selects an initial sequence number for a resource to be selected from the resource set R, and each allocation object ensures that the selected initial sequence numbers do not conflict with each other.

For example, *pᵢ* selects sequence numbers *s*₁*, s*₂*, ... , sₗᵢ,* where *i =* 1,2,3, ..., *M*, *sₗᵢ* = 1,2,3, *... , N,* and ${\sum }_{i = 1}^{M} {\sum }_{j = 1}^{{l}_{i}} {s}_{j} = k$.

In an embodiment, an arbitrarily designated allocation object may select the initial sequence number for each allocation object to ensure that the initial sequence numbers do not conflict with each other.

Further, each allocation object *p*₁*, p*₂*,..., p_{M}* independently generates a random sequence consisting of the N tag sequence numbers.

For example, the tag sequence numbers in the resource set are {1,2,3}. The allocation object *p*₁ selects the sequence number {2}, and generates and commits to the sequence {3,1,2}. The allocation object *p*₂ selects the sequence number {3}, and generates and commits to the sequence {2,1,3}, and so on.

Step 230: An oblivious transfer method is used among the allocation objects, so that each allocation object iteratively obtains intermediate sequence numbers from a plurality of random sequences based on the initial sequence number and according to a predetermined order of a plurality of allocation objects, until a target sequence number is obtained.

Step 240: Each allocation object obtains a target resource from the resource set according to the target sequence number.

It should be understood that the oblivious transfer method refers to a method for information transmission that relies on an oblivious transfer protocol. The oblivious transfer protocol includes various known oblivious transfer algorithms. Its main characteristics are as follows: after a sender sends multiple pieces of information (N pieces) to a receiver, the receiver can obtain the content of one piece of information (1-out of N) or multiple pieces of information (m-out-of-N) that the receiver wants, without knowing the content of the other pieces of information (N-1 or N-m). Simultaneously, the sender does not know which piece or pieces of information the receiver ultimately obtains. The protocol aims to protect the data privacy of both the information sender and the information receiver.

For example, in a financial credit granting scenario according to an embodiment of the present disclosure, the method described can be used by a financial company to confirm with a big data company whether a certain user is a high-quality customer, without disclosing the specific occupation of the user. Specifically, the financial company sets high credit limits for a group of doctors, civil servants, software engineers, and the big data company knows the occupations of its users. Considering a scenario where a financial company has a client U, the financial company needs to confirm with the big data company whether U belongs to one of the aforementioned occupations, but the big data company cannot disclose to the financial company which specific occupation U belongs to, nor can the big data company know which groups the financial company has designated for high credit limits. In this scenario, the financial company and the big data company can interact via the oblivious transfer protocol to enable the financial company to determine whether U belongs to the aforementioned high-credit-limit groups, without either party disclosing their confidential information.

In this embodiment, it is necessary to establish a specific order for a plurality of allocation objects to maintain consistency in allocation among the allocation objects.

In an embodiment, step 230 may further include: each allocation object obtains the corresponding (m+1)-th intermediate sequence number from the m-th random sequence based on the m-th intermediate sequence number.

m sequentially takes values of positive integers from 1 to M, M is the number of allocation objects, the initial sequence number serves as the first intermediate sequence number, and the (M+1)-th intermediate sequence number serves as the target sequence number.

For example, the tag sequence numbers of all resources in the resource set are {1,2,3}. The allocation object *p*₁ selects the sequence number {2} and generates the random sequence {3,1,2}. The allocation object *p*₂ selects the sequence number {3} and generates the random sequence {2,1,3}. In the current step, using the order of *p*₁, *p*₂ as the predetermined order, the allocation object *p*₁ selects the [2]nd resource identifier in its generated random sequence, i.e., {1}, and then uses {1} as the intermediate sequence number to perform an oblivious transfer with the allocation object *p*₂, so as to obtain the [1]st resource identifier from the random sequence of the allocation object *p*₂, i.e., {2}. Thus, after completing the current step, the allocation object *p*₁ obtains the resource corresponding to the sequence number {2} as the allocated resource. Similarly, using the order of *p*₁, *p*₂ as the predetermined order, the allocation object *p*₂ first performs an oblivious transfer with *p*₁ using its pre-selected sequence number {3}, obtains the [3] rd resource identifier {2} from the random sequence of the allocation object *p*₁, and then selects the [2]nd resource identifier in the random sequence of the allocation object *p*₂, i.e., {1}. Thus, the allocation object *p*₂ obtains the resource corresponding to the sequence number {1} as the allocated resource.

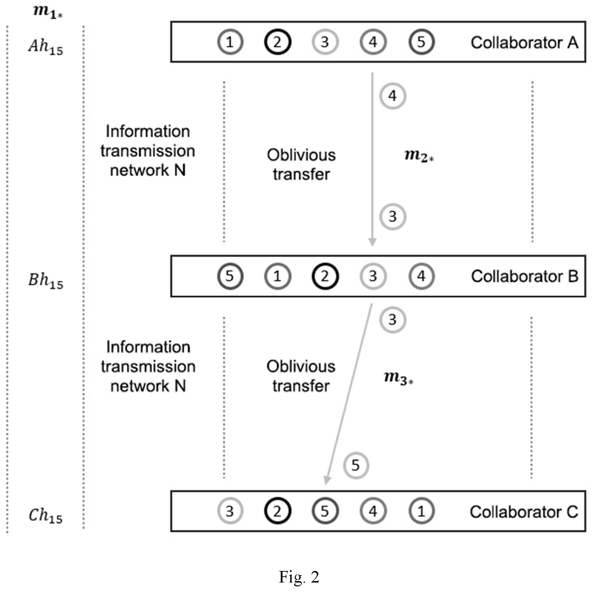

For example, Fig. 2 illustrates the interaction among three allocation objects (A, B, C) when allocating five resources (with resource sequence numbers 1, 2, 3, 4, and 5). The symbols ① to ⑤ represent the corresponding unique identifiers of the resources to be allocated. The row in which each collaborator (i.e., allocation object) is located represents the random sequence generated by that allocation object. The predetermined order of the allocation objects is set as A → B → C. A determines the initial sequence number of 4 and generates the random sequence of 1, 2, 3, 4, 5. B generates the random sequence of 5, 1, 2, 3, 4. C generates the random sequence of 3, 2, 5, 4, 1. First, taking A as an example to determine its allocated resources: A first obtains the intermediate sequence number 4 from its own generated random sequence based on the initial sequence number 4. Subsequently, based on the intermediate sequence number 4, A performs an oblivious transfer with B to obtain the next intermediate sequence number 3. Then, based on the next intermediate sequence number 3, A performs an oblivious transfer with C to obtain the next intermediate sequence number 5. The intermediate sequence number 5 serves as the target sequence number.

Optionally, referring to Fig. 2, {*m_{i*}* | *i* = 1,2,3} represents a series of signature information sent by each allocation object through the information transmission network N, including hash commitment information, oblivious transfer information for the purpose of verifying interactive information.

Thus, by using the oblivious transfer method, each participating allocation object cannot predict its own final allocation result or those of other participating allocation objects during the allocation process. Moreover, it is ensured that the final allocation result is known only to the allocation object itself, thereby ensuring the confidentiality of the allocation result. If, before the relevant proof of the final allocation result is published, the participating allocation objects need to perform game-theoretic actions or competitive actions based on the allocation results already obtained, the use of oblivious transfer ensures that the allocation objects can perform fair game-theoretic actions and competition without disclosing the resources they have already obtained.

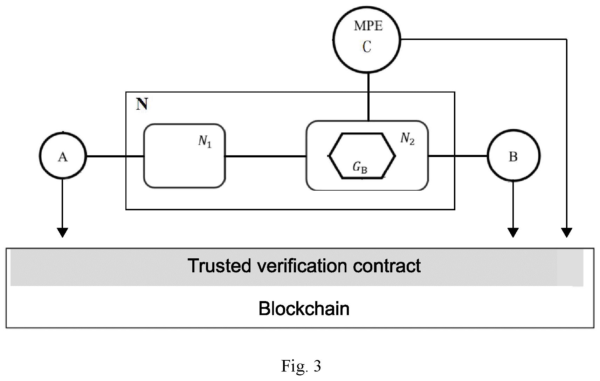

Fig. 3 is a schematic diagram of a transmission network system according to an embodiment of the present disclosure.

In an embodiment, referring to Fig. 3, the transmission network N is used for efficient and fair transmission of information, and includes a plurality of communicatively connected transmission nodes. The transmission network N may specifically be a peer-to-peer transmission network, composed of transmission nodes such as N1, N2, ... which are responsible for receiving, transmitting, routing, and distributing information within the transmission network. Further details regarding the aforementioned information transmission network N can be found in the Chinese patent application No. CN113595736B filed by the applicant, the entire content of which is incorporated by reference into the embodiments of the present disclosure. The plurality of allocation objects (e.g., A, B, C, etc.) included within the group are registered on one or more transmission nodes (e.g., N1, N2, etc.) in the transmission network N. The information receiver is deployed on a designated transmission node of the transmission network, serving as a channel for each allocation object to publish information to the group.

For example, referring to Fig. 3 again, the group receiver G is provided on the designated transmission node of the transmission network N, such as N2 in Fig. 3, and is configured to receive information sent by each of the allocation objects (e.g., A, B, C, etc.) and subsequently publish the information in the group.

In an embodiment, the step of "each allocation object determining an initial sequence number that does not conflict with those of other allocation objects" further includes: each allocation object signs the determined initial sequence number and publishes the signed initial sequence number in the group via the information receiver, so as to ensure that the initial sequence numbers determined by the allocation objects do not conflict with each other.

In an embodiment, the method further includes: each allocation object makes a hash commitment to the generated random sequence and publishes the hash commitment in the group via the information receiver.

A hash commitment (also referred to as Hash Commit or Commit Reveal) refers to a process in which a hash value of content to be published at a future time is published in advance as a hash commitment. After that future time, the content is published, and the published content can be verified using a hash function (also referred to as a hash/hashing algorithm) to be consistent with the hash value published in advance.

For example, at time *t*₀, A holds content s, uses an arbitrary hash algorithm *H* to compute a hash commitment *c = H*(*s*)*,* and publishes c (Hash Commit). At time *t*₁, A publishes the content s (Reveal). Anyone can use *H* to verify *c*' *= H*(*s*) and check whether c = *c'.*

In this way, it can be ensured that each allocation object cannot repudiate the content that is previously published or the content it generates, and cannot arbitrarily adjust or modify the corresponding content during the process.

In an embodiment, the method further includes: each allocation object adding a blinding factor when making the hash commitment to the random sequence.

In the embodiments, when there are few resources (i.e., the resources are susceptible to brute-force attacks), the blinding factor may be added when generating the hash commitment to enhance security. For example, *p*₁ uses the Fisher-Yates shuffling algorithm to generate the sequence {*r*₇*, r*₄, *rₙ, ... , r*₂} and makes the hash commitment *c*₁.

In an embodiment, one or more of the following methods are used to make the hash commitment: concatenating the tag sequence numbers in the random sequence and then performing a hash calculation, and publishing the hash calculation result in the group; constructing a hash tree based on the tag sequence numbers in the random sequence, and publishing a root of the hash tree as the hash commitment in the group.

For example, taking the concatenation method as an example, the hash commitment *c*₁ = *Hash*(*r*₇|*r*₄|*rₙ*| ... |*r*₂|*X*₁), where *X*₁ is the blinding factor.

For example, a Merkle tree (also referred to as the hash tree) and a Merkle proof are tree-like data structures in which each leaf node is labeled with the hash of a data block, and all nodes other than leaf nodes are labeled with a cryptographic hash of the labels of its child nodes. The Merkle trees enable efficient and secure verification of the contents of large data structures, and have been widely applied in cryptography-related and blockchain-related technical fields (such as Bitcoin). Taking a typical Merkle tree as an example, *L*₁ to *L*₄ are the basic data blocks, when the Top Hash is public, the Merkle proof for data blocks are [*Hash*₀₋₁*, Hash*₁]*.*

Thus, when multiple sets of data need to be committed, the hash commitment can be implemented using the Merkle tree. That is, the root of the Merkle tree is published in advance, and the Merkle proof for the relevant data is published later for verification.

Alternatively, other methods that can ensure the uniqueness of the sequence and resistance of brute-force attacks may also be used.

Furthermore, in the hash verification phase, each allocation object publishes its random sequence in the group via the information receiver, so that the allocation objects can verify the published random sequences based on the previously published hash commitment.

Furthermore, if the blinding factor is used when making the hash commitment, in the hash verification phase, each allocation object publishes its random sequence and the blinding factor in the group via the information receiver, so that the allocation objects can verify the published random sequence and the blinding factor based on the previously published hash commitment.

Furthermore, to verify the authenticity of the oblivious transfer, each allocation object publishes the keys used during the oblivious transfer process in the group via the information receiver, so that the allocation objects can verify the interactive information of the oblivious transfer process against each other.

In an embodiment, to ensure that the above allocation results can be verified and enforced, the method includes creating a trusted verification contract on a blockchain; and one or more allocation objects in the group staking a trusted credential in the trusted verification contract.

Specifically, the trusted verification contract is configured to perform any of the following operations.
1. The trusted verification contract receives the hash commitment, the random sequence, the blinding factor, and the corresponding signatures published by the designated allocation object in the group. It verifies whether the hash commitment, the random sequence, the blinding factor, and the corresponding signatures are consistent. If they are inconsistent, the trusted verification contract imposes a penalty on the staked trusted credential of the designated allocation object in the trusted verification contract.
2. The trusted verification contract receives public interactive information exchanged between designated allocation objects during the oblivious transfer process. The trusted verification contract receives the keys used by designated allocation objects during the oblivious transfer process. The trusted verification contract verifies the public interactive information during the oblivious transfer process based on the keys used during the oblivious transfer process. If they are inconsistent, the trusted verification contract imposes a penalty on the staked trusted credential of the designated allocation objects in the trusted verification contract.

For example, taking two participating allocation objects *p*₁ and *p*₂ using a simple oblivious transfer method as an example, the information exchanged between two participating allocation objects in the information receiver during the oblivious transfer process includes publicly transmitted information and finally disclosed secret information.

The publicly transmitted information includes *S, Rⁱ, cⁱ* (i.e., the resource sequence numbers *sₗᵢ* pre-selected by *p*₁ and *p*₂), and encrypted information. The encrypted information is obtained by encrypting the content of the random sequence using the keys generated based on the above information and the secret information not yet disclosed.

The finally disclosed secret information includes *y* and *xⁱ.*

The trusted verification contract can combine the above information to verify the data of the allocation objects during the oblivious transfer process. If the data is inconsistent, the trusted verification contract imposes a penalty on the staked trusted credential of the reported allocation object in the contract.

3. The trusted verification contract imposes a penalty on the staked trusted credential of the allocation object that exceeds the time limit based on the time difference of interactive information exchanged between allocation objects during the oblivious transfer process.

For example, taking two allocation objects *p*₁ and *p*₂ as an example, the time limit for each step of the allocation interaction process is pre-agreed in the contract as 10 seconds. When it is the turn of the allocation object *p*₂ to publish an oblivious transfer message or sign the allocation result information in G, but *p*₂ refuses to perform, *p*₁ may submit the most recent valid process information a of *p*₂ to the contract. If the contract grants *p*₂ a time period of 10 minutes to submit self-defense evidence, and *p*₂ is able to provide its subsequent process information b within the 10-minute period, the contract may impose a timeout penalty on the staked trusted credential (staked asset) of *p*₂ based on the time difference between the two pieces of information a and b. If *p*₂ fails to submit self-defense evidence to the contract within 10 minutes, the contract imposes a penalty on the staked trusted credential (staked asset) of *p*₂ for refusing to perform the process obligations.

4. The trusted verification contract receives allocation results signed by each allocation object, and after signature verification, allocates the resources to each allocation object according to the signed allocation results.

The following describes various application scenarios where the present disclosure can be utilized. The present disclosure can provide secure randomness, verifiable fairness, and scalability of multi-party secure confidential interaction for relevant application scenarios, and thus has broad application value.

In one scenario, the embodiments of the present disclosure can be used in an online random matching scenario. That is, in a defined group where two or more objects (e.g., user terminal devices) need to be matched and then collaborate (e.g., to complete tasks or participate in activities), the method of the present disclosure can be used to perform fair and confidential matching to avoid disputes over the fairness of the pairing process and to prevent the situation where the pairing result is leaked in advance, causing the matched parties to be informed in advance or refuse to cooperate with each other.

For example, in a group of 50 objects where pairwise matching is performed, the number of resources n is 2, the number of resources to be allocated *k* is 2, and the number of participating allocation objects m is 50. The allocation is performed 25 times, obtaining 25 allocation results. One allocation method is as follows: before beginning the allocation, 25 pairs of unique identifiers are established, each pair representing one of the 25 teams, for example, *S =* {*s*|*s* = 1,1,2,2, ...,24,25,25}. The 50 objects randomly select one number from 1 to 50 as their identifier, and the selected identifiers do not conflict with each other. Based on set S, the 50 objects independently generate random sequences, and obtain their respective allocation results according to the method described in the present disclosure.

Further, in the above example, when the group participating in the matching is large, for example, when n = 5 and m = 1,000,000, the interaction process may become excessively lengthy if all pairings are completed according to the aforementioned design. This would be extremely inefficient in practical scenarios. In such cases, the object group may first be grouped according to objective characteristics as needed, such as the hash values of corresponding public keys or transaction hash values of consecutive blocks on the blockchain, to improve efficiency. Specifically, based on the public keys of asymmetric key pairs generated by each of one million user terminals, each user terminal first publishes the hash commitment of its public key using the Keccak-256 hashing algorithm, and then publishes its public key. Subsequently, the hash value of each public key is calculated using the SHA-256 hashing algorithm. The first 64 bits of the hash value are extracted and sorted in ascending order based on these bits. According to the sorting result, every 20 or 50 user terminals are sequentially grouped together. Within each group, a method similar to the above-described allocation method involving 50 participants is used to perform random matching in groups of five. In this way, interaction efficiency can be improved.

In another scenario, the embodiments of the present disclosure can be used in a leader node selection scenario in a distributed system. Specifically, in a distributed computing task system that uses digital signatures for identity authentication, the method proposed in the embodiments of the present disclosure is used to select the leader node. This allows the leader election to be completed fairly and securely in an adversarial environment without disclosing the identities of the computing nodes.

In another scenario, the embodiments of the present disclosure can be used in a fair task allocation scenario. Specifically, the method enables confidential and secure allocation of computational tasks or work tasks to multiple terminals or multiple individuals. Examples include the allocation of computational tasks to distributed computers, the dispatch of transportation tasks to vehicles, and the assignment of work tasks to workers. Optionally, taking vehicle transportation task allocation as an example, when grouping in large-scale scenarios, objective factors such as geographic location and vehicle condition may be considered for grouping, followed using a divide-and-conquer strategy to complete fair and random allocation of tasks to vehicles.

In another scenario, the embodiments of the present disclosure can be applied to the selection of project reviewers, online jury members, or arbitration panel members. In a defined group, several objects are fairly selected as arbitration panel members or jury members for a specific online arbitration case, or as review expert members for a project, without disclosing the matching information between the members and the case or tasks before the completion of the relevant business.

For example, in a group of 10 professionals, 3 individuals are randomly selected from 10 candidates to serve as professional reviewers for a project in a specific technical field. In this case, the number of resources n is 3, the number of resources to be allocated *k* is 3, and the number of allocation objects m is 10. That is, 3 project review seats are to be randomly allocated among the 10 experts. Before the allocation begins, the 10 experts are sequentially assigned unique identifiers from 1 to 10. Each expert pre-selects an identifier number *sᵢ* = 1,2, ... ,10, and the set {*sᵢ*|*i =* 1,2, ... ,10} contains no duplicate values. The system stipulates that the experts who ultimately obtain identifiers 1, 2, and 3 through the allocation method of the present disclosure will obtain the three review seats for the project. The 10 experts each independently generate random sequences and, according to the method of the present disclosure, obtain their allocated identifiers, thereby completing the fair and random allocation of project review seats. Moreover, this ensures that the allocation results are fair and random as long as at least one expert does not collude with any other participant. After the allocation results are obtained, only the experts who have been assigned the three review seats know their own results. This confidentiality provides effective protection for the experts during the project review process, significantly increasing the difficulty and cost of soliciting or accepting bribes, thereby avoiding any compromise of the fairness of the review.

In another scenario, the embodiments of the present disclosure can be applied to turn-based multiplayer online competitive games, supporting a variety of turn-based online competitive games including board games (e.g., Chinese chess, Ludo (also known as Flying Chess)), card games, mahjong, adventure games, and murder mystery games. Examples include Texas Hold'em, Sichuan Mahjong, Military Chess, Ludo, Monopoly, Legends of the Three Kingdoms, and Hearthstone. Other examples include random card dealing, random tile flipping, random character selection, random position allocation, and random item distribution in esports. By utilizing the allocation method designed in the present disclosure, it is possible to enhance the security and scalability of the entire game process while fully ensuring the game's fairness, randomness, and interactivity. Specifically, the method provides: improved security, enhanced fairness, improved interactivity, and increased scalability.

In the descriptions of this specification, descriptions with reference to terms such as "some possible embodiments," "some embodiments," "examples," "specific examples," or "some examples" indicate that the specific features, structures, materials, or characteristics described in connection with such an embodiment or example are included in at least one embodiment or example of the present disclosure. Furthermore, the above terms do not necessarily refer to the same embodiment or example. Furthermore, the specific features, structures, materials, or characteristics described may be combined in any one or more embodiments or examples in a suitable manner. Additionally, provided there is no contradiction, those skilled in the art may combine and integrate the different embodiments or examples described in this disclosure, as well as the features of different embodiments or examples.

Regarding the method flowcharts illustrating the embodiments of the present disclosure, certain operations are described as distinct steps executed in a specific sequence. Such flowcharts are illustrative rather than limiting. Certain steps described herein may be grouped together and executed in a single operation, or certain steps may be divided into multiple sub-steps, and certain steps may be executed in an order different from that shown herein. The various steps shown in the flowcharts may be implemented in any manner by any circuit structure and/or tangible mechanism (e.g., software running on a computer device, hardware (e.g., logic functions implemented by a processor or chip), and/or any combination thereof).

Those skilled in the art will understand that, in the methods described in the above-mentioned specific embodiments, the order in which the steps are described does not imply a strict order of execution; the specific order of execution of the steps should be determined based on their function and possible inherent logic.

According to some embodiments of the present disclosure, a group resource allocation device according to an embodiment of the present disclosure is provided for performing the group resource allocation method illustrated in Fig. 1. The device includes at least one processor and a memory communicatively coupled to at least one processor. The memory stores instructions executable by at least one processor, and the instructions, when executed by at least one processor, cause at least one processor to perform the method described in the above embodiments.

According to some embodiments of the present disclosure, a non-volatile computer storage medium is provided, on which computer-executable instructions are stored. The computer-executable instructions are configured to be executed by a processor to perform the method described in the aforementioned embodiments.

Computer-readable media include permanent and non-permanent, removable and non-removable media, and may be implemented by any method or technology for storing information. The information may be computer-readable instructions, data structures, or program modules. Examples of computer-readable storage media include, but are not limited to, phase-change memory, static random-access memory (SRAM), dynamic random-access memory (DRAM), other random-access memory, read-only memory, electrically erasable programmable read-only memory (EEPROM), flash memory, or other memory technologies; CD-ROMs, digital versatile discs (DVDs), or other optical storage media, magnetic tape cartridges, magnetic tape, magnetic disk storage, or other magnetic storage devices, or any other non-transmissive medium capable of storing information accessible by a computing device. Furthermore, although the operations of the method of the present disclosure are described in a specific order in the accompanying drawings, this does not require or imply that these operations must be performed in that specific order, or that all operations shown must be performed to achieve the desired results. Furthermore, certain steps may be omitted, multiple steps may be combined into a single step, and/or a single step may be divided into multiple sub-steps.

Although the spirit and principles of the present disclosure have been described with reference to several specific embodiments, it should be understood that the present disclosure is not limited to the specific embodiments disclosed, and the division into various aspects does not imply that features of these aspects cannot be combined. It should be understood that any modifications and replacements made by those skilled in the art without departing from the spirit of the disclosure should fall within the scope of the disclosure defined by the appended claims.

## Claims

1. A method for allocating resources within a group, the group comprising a plurality of allocation objects, and the method comprising:
determining a resource set, wherein the resource set comprises N resources each carrying a tag sequence number, where N is a positive integer;
determining, by each allocation object, an initial sequence number that does not conflict with those of other allocation objects, and generating a random sequence, wherein the random sequence consists of N tag sequence numbers;
using an oblivious transfer method among the plurality of allocation objects, so that each allocation object iteratively obtains an intermediate sequence number from a plurality of random sequences based on the initial sequence number and according to a predetermined order of the plurality of allocation objects, until a target sequence number is obtained; and
obtaining, by each allocation object, a target resource from the resource set according to the target sequence number.

2. The method according to claim 1, **characterized in that** step of "each allocation object iteratively obtains an intermediate sequence number from a plurality of random sequences based on the initial sequence number and according to a predetermined order of the plurality of allocation objects" comprises:
each allocation object obtaining a corresponding (m+1)-th intermediate sequence number from an m-th random sequence based on an m-th intermediate sequence number;
wherein m sequentially takes values of positive integers from 1 to M, M is the number of allocation objects, the initial sequence number serves as a first intermediate sequence number, and an (M+1)-th intermediate sequence number serves as the target sequence number.

3. The method according to claim 1, **characterized in that** step of "determining, by each allocation object, an initial sequence number that does not conflict with those of other allocation objects" comprises:
selecting, by an arbitrarily designated allocation object, the initial sequence number for each allocation object to ensure that initial sequence numbers do not conflict with each other.

4. The method according to claim 1, **characterized in that** the plurality of allocation objects are registered on one or more transmission nodes of a transmission network, and a designated transmission node of the transmission network is deployed with an information receiver serving as a channel for each allocation object to publish information to the group.

5. The method according to claim 4, **characterized in that** step of "determining, by each allocation object, an initial sequence number that does not conflict with those of other allocation objects" comprises:
signing, by each allocation object, a determined initial sequence number and publishing a signed initial sequence number in the group via an information receiver, so as to ensure that the initial sequence number determined by each allocation object does not conflict with each other.

6. The method according to claim 1, further comprising:
making a hash commitment by each allocation object to a generated random sequence and publishing the hash commitment in the group via an information receiver.

7. The method according to claim 6, further comprising:
adding a blinding factor when making the hash commitment by each allocation object to the generated random sequence.

8. The method according to claim 6, further comprising:
in a hash verification phase, publishing the random sequence by each allocation object in the group via the information receiver, so that each allocation object mutually verifies a published random sequence based on a previously published hash commitment.

9. The method according to claim 7, further comprising:
in a hash verification phase, publishing by each allocation object the random sequence and the blinding factor in the group via the information receiver, so that each allocation object mutually verifies a published random sequence and the blinding factor based on a previously published hash commitment.

10. The method according to claim 1, further comprising:
publishing, by each allocation object, a key used in an oblivious transfer process in the group via the information receiver, so that each allocation object mutually verifies interactive information of the oblivious transfer process.

11. The method according to claim 1, further comprising:
creating a trusted verification contract on a blockchain; and
staking, by one or more allocation objects in the group, a trusted credential in the trusted verification contract.

12. The method according to claim 11, **characterized in that** the trusted verification contract is configured to:
receive a hash commitment, a random sequence, a blinding factor, and corresponding signatures published by a designated allocation object in the group;
verify whether the hash commitment, the random sequence, the blinding factor, and the corresponding signatures are consistent:
if inconsistent, impose a penalty on a staked trusted credential of the designated allocation object in the trusted verification contract.

13. The method according to claim 11, **characterized in that** the trusted verification contract is configured to:
receive public interactive information between designated allocation objects during an oblivious transfer process;
receive a key used by designated allocation objects during the oblivious transfer process;
verify the public interactive information during the oblivious transfer process based on the key used during the oblivious transfer process; and
if inconsistent, impose a penalty on a staked trusted credential of the designated allocation objects in the trusted verification contract.

14. The method according to claim 11, **characterized in that** the trusted verification contract is configured to impose a penalty on a staked trusted credential of an allocation object that exceeds a time limit in the trusted verification contract based on a time difference of interactive information between the plurality of allocation objects during the oblivious transfer process.

15. The method according to claim 11, **characterized in that** the trusted verification contract is configured to receive an allocation result signed by each allocation object, and after signature verification, allocate resources to each allocation object according to the allocation result signed.

16. A group resource allocation device, comprising:
at least one processor; and
a memory;
**characterized in that** the memory is communicatively connected to the at least one processor; the memory is configured to store instructions executable by the at least one processor, the instructions, when executed by the at least one processor, cause the at least one processor to perform the method according to any one of claims 1-15.

17. A computer-readable storage medium, **characterized in that** the computer-readable storage medium is configured to store a program, and when the program is executed by a multi-core processor, the program causes the multi-core processor to perform the method according to any one of claims 1-15.
